Europäisches Patentamt

European Patent Office

Office européen des brevets

(11) Numéro de publication: **0 370 549**
A2

## (12) DEMANDE DE BREVET EUROPEEN

(21) Numéro de dépôt: 89202789.7

(22) Date de dépôt: 06.11.89

(51) Int. Cl.⁵: **G01N 1/28, A61J 3/00**

(30) Priorité: 24.11.88 BE 8801329

(43) Date de publication de la demande:
30.05.90 Bulletin 90/22

(84) Etats contractants désignés:
**BE CH DE ES FR IT LI**

(71) Demandeur: **LABOTICS ,besloten vennootschap met beperkte aansprakelijkheid**
**Heidestraat 254**
**B-2720 Zwijndrecht(BE)**

(72) Inventeur: **Hendrickx, Jacobus Julianus**
**Heidestraat 254**
**B-2720 Zwijndrecht(BE)**

(74) Mandataire: **Donné, Eddy**
**M.F.J.Bockstael Arenbergstraat 13**
**B-2000 Anvers(BE)**

(54) **Procédure et dispositif pour la dilution de compositions.**

(57) Procédure pour la dilution de compositions, plus particulièrement de produits homéopathiques, où des quantités consécutives de liquide diluant (3) sont amenées dans un réservoir mélangeur (1) étant chaque fois vidangées, les quantités respectives à diluer étant chaque fois formées par le produit demeurant sur les parois du réservoir mélangeur (1) après chaque cycle de mélange, caractérisée en ce que le réservoir mélangeur (1) est évidé par jet d'air après chaque cycle de mélange.

Fig.1

EP 0 370 549 A2

# Procédure et dispositif pour la dilution de compositions.

La présente invention a trait à une procédure et un dispositif pour la dilution de compositions.

Plus particulièrement, elle a trait à une procédure et un dispositif pour la dilution de produits homéopathiques suivant la méthode Korsakov.

Le fait est connu que, lors de la préparation de produits homéopathiques, le point de départ est un produit de base étant, en fonction du produit et son application, dilué de quelques fois à quelques milliers de fois. La dilution peut, dans ce cas, se faire en appliquant ladite méthode Korsakov comprenant, telle que connue, le mélange d'une quantité définie du produit de base avec de l'eau étant agitée dans un réservoir mélangeur, étant ensuite vidé, de telle manière que seul le liquide suspendu aux parois du réservoir mélangeur demeure et le réservoir mélangeur étant ensuite rempli avec une certaine quantité de liquide, suivi d'une réagitation dudit réservoir, suivie d'une répétition de cette opération en quantités nécessaires.

Pour l'obtention de ladite méthode de dilution des dispisitifs automatiques sont également connus. Dans ce cas un réservoir mélangeur, dans la plupart des cas en forme d'un genre de flacon, est humidifié avec la composition de base et placé dans le dispositif suivi d'un nombre de cylces de dilution effectués automatiquement. Dans ce cas chaque cycle comprend l'addition d'une certaine quantité de liquide, par exemple de l'eau déminéralisée, dans le réservoir mélangeur par l'entremise d'un dispositif de pompage. Il est évident que pas seulement la canalisation de vidange mais aussi le dispositif de pompage contacte le produit homéopathique traité lors de cette dernière opération. Les dispositifs connus possèdent donc le désavantage que, pour éviter toute contamination lors du traitement d'un autre produit, le dispositif de pompage doit être démonté, nettoyé et stérilisé, ce qui est une occupation qui prend du temps et coûteuse.

Les dispositifs connus où le réservoir mélangeur est vidé par l'entremise d'un dispositif de pompage possèdent également le désavantage de la possibilité d'introduction de particules polluantes de la pompe qui peuvent s'introduire lorsque les dilutions intermédiaires doivent être recueillies. Le fait est évidemment connu que de l'eau fortement déminéralisée est très aggressive et peut même affouiller des parties chromées suivi d'une possibilité d'introduction d'ions de chrome dans la dilution intermédiaire vidangée.

Le fait est également connu que les dispositifs actuels utilisés pour la dilution de compositions homéopathiques pour l'agitation du réservoir mélangeur sont équipés d'un excentrique ou d'un volant excentrique propulsé par des moteurs classiques à balais ou à bagues.

Le nombre de mouvements vibratoires effectués dans ce cas comprend environ 40.000 vibrations par heure, où dans le cas d'une utilisation normale des machines environ 400 démarrages et arrêts sont effectués par heure. En outre, lesdits dispositifs opèrent de façon pratiquement continue dans beaucoup d'entreprises. Ces dispositifs connus possèdent donc aussi le désavantage que, par la multitude de démarrages et d'arrêts, les balais ou bagues brûlent et s'usent rapidement, ce qui porte à des révisions fréquentes des moteurs.

Par conséquent, le fait que les balais ou bagues doivent régulièrement être remplacés a des conséquences en frais de maintenance élevés.

En outre, plusieurs pièces sont chargées latéralement par l'utilisation desdits excentriques et elles sont de cette manière sujettes à une usure importante, ce qui porte au remplacement d'un nombre de ces pièces lors de chaque entretien.

La présente invention concerne une procédure et un dispositif pour la dilution de compositions qui ne possèdent pas les désavantages susdits, ni d'autres.

La présente invention a trait, dans ce but, à une procédure pour la dilution de compositions, plus particulièrement des produits homéopathiques, dans laquelle des quantités consécutives de liquide diluant sont amenées dans un réservoir mélangeur et sont à chaque fois vidangées, les quantités respectives à diluer étant chaque fois formées par le produit demeurant sur les parois du réservoir mélangeur après chaque cycle de mélange, caractérsée en ce que le réservoir mélangeur est évidé par jet d'air après chaque cycle de mélange. Le fait que le réservoir mélangeur est évidé par jet d'air au lieu d'une vidange par pompage possède l'avantage que lors du passage à la préparation d'un autre produit aucun dispositif de pompage ne doit être nettoyé, excepté uniquement la canalisation de vidange, ce qui ne prend que peu de temps. Afin d'effectuer le travail plus rapidement, la canalisation de vidange, étant habituellement un petit tuyau de matière synthétique, peut tout simplement être remplacée par un autre.

La présente invention a également trait au dispositif qui effectue ladite procédure, comprenant un réservoir mélangeur, des moyens pour introduire un liquide diluant dans le réservoir mélangeur, des moyens pour vidanger le réservoir mélangeur, des moyens pour agiter le réservoir mélangeur et une unité de commande qui permet au moins que le remplissage et la vidange peut se répéter un nombre de fois sélectionné caractérisé en ce que les moyens de vidange du réservoir mélangeur consistent en un dispositif d'évidage par jet d'air.

Pour solutionner le deuxième désavantage les moyens pour l'agitation du réservoir suivant l'inventon comprennent un mécanisme dont les pièces sont principalement sujettes des charges purement axiales.

Un vibromoteur magnétique est utilisé dans une réalisation préférentielle éliminant les désavantages susdits relatifs aux moteurs à balais et à bagues ainsi qu'aux excentriques.

Dans le but de mieux démontrer les caractéristiques suivant l'invention, une réalisation préférentielle est décrite ci-dessous, en tant qu'exemple et sans caractère limitatif, avec référence aux dessins ci-inclus, dans lesquels :

　　　la figuré 1 représente un schéma du dispositif suivant l'invention ;

　　　les figures 2 et 3 représentent, à plus grande échelle, une réalisation pratique des parties indiquées respectivement par F2 et F3 dans la figure 1 ;

　　　la figure 4 représente une réalisation pratique du dispositif vu en perspective ;

　　　la figure 5 est une vue en coupe suivant la ligne V-V dans la figure 4.

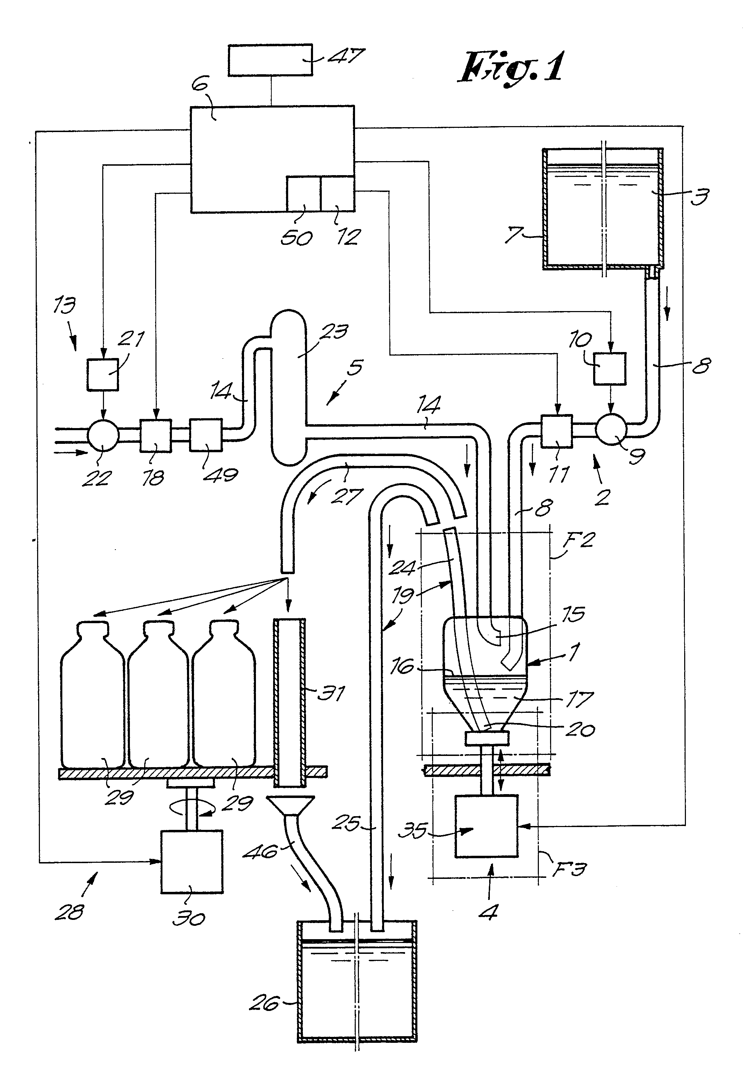

Tel que représenté schématiquement dans la figure 1, le dispositif suivant l'invention comprend principalement un réservoir mélangeur 1 ; des moyens 2 pour amener un liquide diluant 3 dans le réservoir mélangeur 1 ; des moyens 4 pour agiter le réservoir mélangeur 1 ; des moyens 5 pour vider le réservoir mélangeur 1 ; et une unité de commande 6 qui est reliée aux différentes pièces du dispositif et qui permet au moins la répétition du remplissage et de la vidange un nombre de fois.

Dans la réalisation représentée les moyens d'admission 2 du liquide diluant 3, étant habituellement constitué d'eau déminéralisée, comprenant un réservoir 7, une canalisation d'admission 8 qui s'étend à l'intérieur du réservoir mélangeur 1, une pompe 9 propulsée de préférence par un moteur 10 relié à une unité de commande 6 et des moyens de dosage comprenant une soupape à chronorupteur 11 commandée par un chronorupteur 12 incorporé dans l'unité de commande 6.

A chaque remplissage du réservoir mélangeur 1 la soupape 11 est ouverte durant une période déterminée à l'avance, de sorte qu'à chaque fois la quantité désirée de liquide diluant 3 est débitée dans le réservoir mélangeur 1. Pour éviter que la différence de niveau du réservoir 7 influence le débit par la soupape 11, et donc la quantité de liquide débité dans le réservoir mélangeur 1, la pompe 9 augmente la pression du liquide, de sorte que la différence de pression qui pourrait se développer par la différence de niveau du réservoir 7 forme une fraction négligeable de la pression totale créée à la sortie de la pompe 9.

La pompe 9 est, de préférence, du type dont l'organe de pompage effectif est relié magnétiquement à un moteur 10 placé à l'extérieur de la partie de la pompe contenant le liquide . De cette façon l'intrusion possible dans le circuit de liquide de polluants du moteur 10 est totalement exclue.

Il est évident que d'autres moyens d'admission 2 que ceux décrits ci-dessus peuvent être appliqués, par exemple lors de l'application d'une pompe de dosage ou similaire.

Une première caractéristique particulière de la présente invention consiste en ce que le réservoir mélangeur 1 est évidé par jet d'air. Les moyens 5 consistent dans ce cas d'un dispositif d'évidage par jet d'air formé par une source de pression d'air 13 ; une canalisation d'admission d'air 14 qui s'étend jusque dans le réservoir mélangeur 1, dont l'extrémité 15 est située au-dessus du niveau de liquide normal 16 de la quantité de liquide permise 17 dans le réservoir mélangeur ; une soupape 18 placée dans la canalisation d'admission d'air 14 commandée par l'entremise de l'unité de commande 6 ; et une canalisation d'évidage 19 dont l'extrémité inférieure 20 s'étend jusqu'à l'intérieur du réservoir mélangeur 1.

La source d'air comprimé 13 consiste, de préférence, d'une pompe à membrane 22 commandée par un moteur 21. Une telle pompe à membrane possède l'avantage d'éviter l'intrusion de pollution externe, telle que de l'huile de graissage, dans le circuit d'air.

Un élément collecteur 23 peut être installé dans la canalisation d'admission d'air 14 qui empêche au liquide du réservoir mélangeur 1 de contaminer la soupape 18 à cause d'un refoulement accidentel et partiel dans la canalisation d'admission d'air.

L'élément collecteur 23 peut évidemment comprendre un flacon en dessus duquel la canalisation d'admission d'air 14 aboutit et quitte le flacon par le dessous.

La canalisation d'évidage 19 comprend, de préférence, un petit tuyau de teflon 24 auquel un tuyau d'évacuation peut être relié à l'extérieur du réservoir mélangeur 1. Dans ce cas on peut utiliser soit un tuyau d'évacuation 25 qui amène le liquide directement à un dispositif collecteur 26 ou un tuyau d'évacuation, ou un flexible d'évacuation 27 qui se présente à un dispositif collecteur 28, qui est décrit plus amplement ci-après, comprenant plusieurs récipients 29 qui peuvent être présentés, au choix, sous l'extrémité du flexible d'écoulement 27, par l'entremise d'une commande 30 reliée à l'unité de commande 6, de sorte qu'une quantité de dilutions intermédiaires, ou la dilution finale peuvent être collectées. Le dispositif collecteur 28 possède également un passage 31 permettant au flexible d'écoulement 27 d'être aussi relié audit récipient collecteur 26 ou à un tuayu d'écoulement, pour les dilutions qui ne doivent pas être collectées.

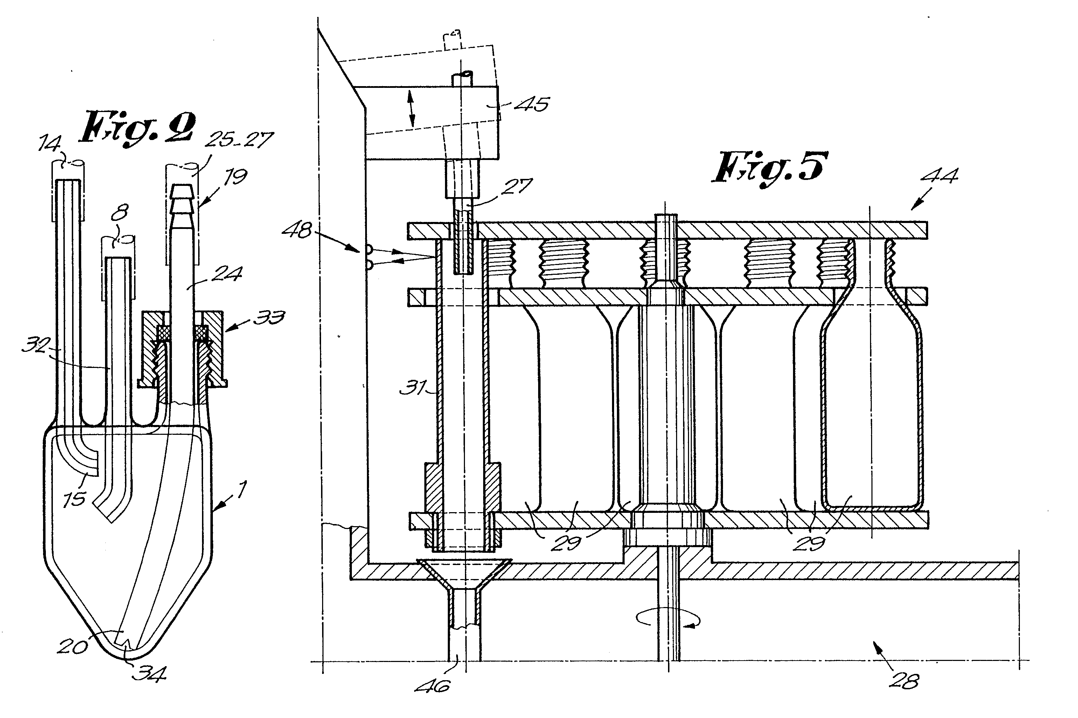

La figure 2 représente une réalisation pratique du réservoir mélangeur 1. Celui-ci comprend principalement un flacon fermé pourvu de deux canalisations de raccordement de verre 32 permettant la connexion des petits tuyaux flexibles de matière synthétique, respectivement la canalisation d'admission 8 et la canalisation d'admission d'air 14. Le petit tuyau de teflon 24 s'étend jusqu'au fond du réservoir mélangeur 1, où le passage de ce petit tuyau par la paroi du réservoir mélangeur 1 est obturé par l'entremise d'un joint d'étanchéité réglable 33. Le petit tuyau de teflon 24 présente de préférence à son bord inférieur au moins un évidement 34 par lequel le liquide 17 peut facilement être insufflé dans le petit tuyau 24.

Suivant une autre caractéristique importante de la présente invention les moyens 4 d'agitation du réservoir mélangeur 1 comprennent principalement un mécanisme dont les pièces sont purement sujettes à des charges axiales, de préférence un vibromécanisme magnétique.

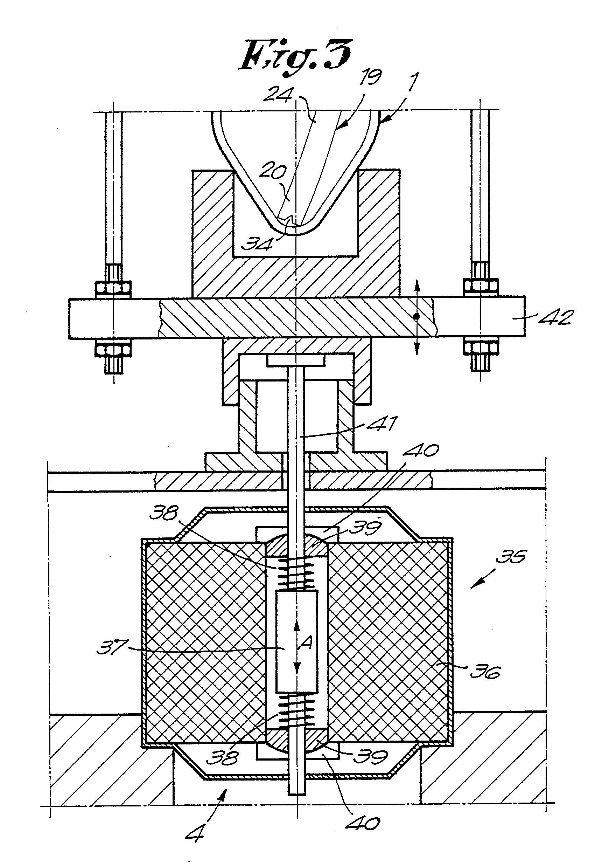

Plus particulièrement à cet effet, tel que représenté dans la figure 3, un vibromoteur magnétique 35 fonctionnant sur la fréquence du réseau étant mis en route et arrêté par l'entremise de l'unité de commande 6. Le vibromoteur 35 consiste principalement en soi d'un électro-aimant 36 relié à la tension du réseau et d'un induit 37 pouvant vibrer en direction axiale, étant placé dans celui-ci par l'entremise de ressorts 38, de manchons de guidage 39 de cuivre et de supports 40 permettant la dépose et pose simple des manchons de guidage 39.

L'induit 37 présente également une tige 41 s'étendant vers le haut sur laquelle une table vibrante 42 est installée pour la fixation du réservoir mélangeur 1.

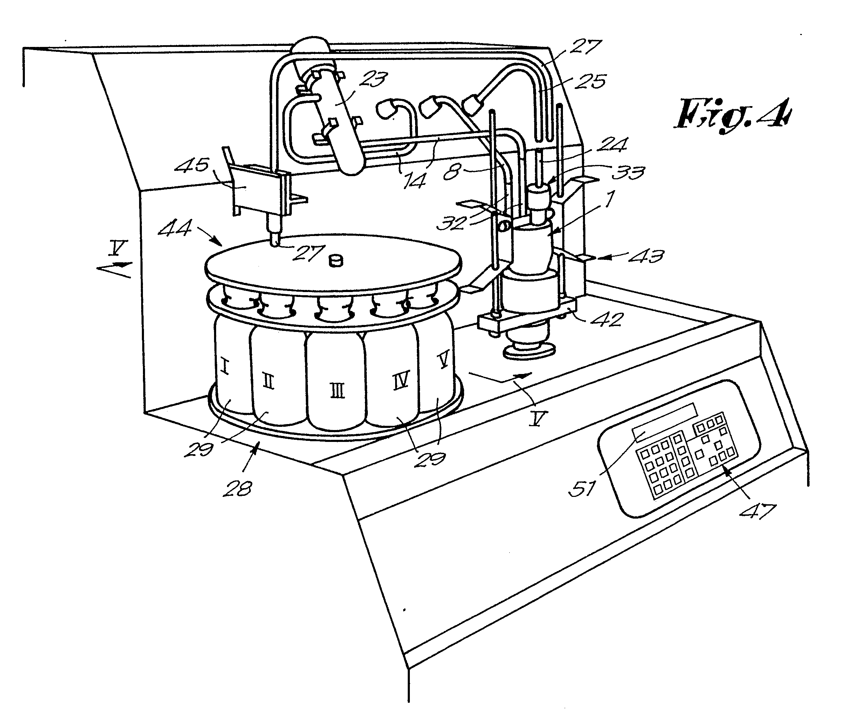

Tel que figurant dans la figure 4, la table vibrante 42 est évidemment prévue de moyens de fixation 43 pour retenir le réservoir mélangeur 1. De tels moyens de fixation 43 sont connus.

Il est évident, dans la figure 3, que lors du mouvement vibratoire A aucune pièce est chargée latéralement causant, par conséquent, une usure dérisoire dans les manchons de guidage 39. Lorsque le remplacement de ces manchons 39 s'avère tout de même nécessaire, il exige une intervention simple comparée à celle du remplacement de balais de charbon ou similaires dans les réalisation connues jusqu'à présent.

Il est évident que l'application dudit dispositif collecteur 28 est facultative. Les figures 4 et 5 représentent une réalisation d'un tel dispositif collecteur 28 qui est de préférence appliquée en combiné audit dispositif d'évidement par jet d'air.

Dans ce cas un porteur en forme de carrousel 44 est utilisé contenant les récipients 29, par exemple des petits flacons, ainsi que ledit passage 31 installé dans le support 24. L'extrémité du tuayu flexible d'évacuation 27 est, de préférence, présentée à un endroit déterminé par l'entremise d'un bras mobile 45. Dans la position neutre du support 44 le passage 31 se situe sous l'extrémité du tuayu flexible d'évacuation 27, l'un et l'autre de telle manière que le liquide projeté par jet d'air hors du réservoir mélangeur 1 est dirigé par ce passage 31 vers une canalisation d'écoulement 46. Lorsqu'une dilution déterminée doit être collectée, le support 44 est tourné par l'entremise de la commande 30 jusqu'à ce que le récipient désiré 29 se trouve sous l'extrémité du tuayu flexible d'évacuation 27, suivi de l'introduction par jet d'air du liquide du réservoir mélangeur 1 dans ce récipient.

L'unité de commande 6 prévoit le positionnement programmable des récipients, où des différentes dilutions désirées peuvent être collectées dans des récipients individuels. Le type de dilution à introduire dans un certain récipient peut être introduit à l'aide d'un clavier 47, par exemple la dixième dilution dans le récipient numéro I, la dix-septième dilution dans le récipient numéro II, la millième dilution dans le récipient numéro III, etc.

Le mécanisme de commande pour le positionnement du support 44 peut être de n'importe quel genre connu. Le contrôle de disponibilité des récipients peut se faire à l'aide d'un oeil optique 48.

Un filtre 49 peut éventuellement être installé dans la canalisation d'admission d'air 14. L'éxclusion virtuelle d'une contamination par l'atmosphère à l'intérieur du réservoir mélangeur 1 durant le processus de mélange est un avantage qui peut être présenté.

Enfin, l'unité de commande 6 peut également comprendre des moyens de calibrage 50 automatiques reliés à la soupape à chronorupteur 11, de manière qu'un contrôle de la quantité de liquide admise puisse s'effectuer initialement. Ces moyens de calbrage 50 permettent lors de l'enfoncement d'une touche déterminée du clavier 47 que la soupape 11 s'ouvre durant une certaine période. Dans ce cas le liquide libéré est collecté dans un flacon ou similaire, suivi du pesage du liquide. Ce poids est ensuite enregistré par le clavier 47 de concert avec la quantité de liquide 17 désirée par cycle, les valeurs s'affichant sur une unité de lecture 51, suivi de la définition automatique par les moyens de calibrage 50 par l'entremise d'un programme incorporé et d'une "règle de trois" de la durée d'ouverture de la soupape 11 pour l'admission de la quantité de liquide désirée.

Le fonctionnement du dispositif est principalement suivant la description ci-après. Il consiste en ce que la machine est mise en marche après avoir effectué ledit calibrage, toutes les données indispensables ayant évidemment été enregistrées par l'unité de commande 6, telles que par exemple le nombre de fois que la dilution doit être effectuée et les dilutions intermédiaires devant être collectées dans les récipients 29. De cette façon des cycles de mélange consécutifs sont automatiquement effectués comprenant chacun l'évidement par jet d'air du réservoir mélangeur 1 par les moyens 5, l'admission de la quantité de liquide suivante désirée par la canalisation d'admission 8, et l'enclenchement momentané du vibromoteur 35, le produit demeurant sur les parois dudit réservoir après évidement par jet d'air lors de chaque cycle formant la base pour chaque dilution suivante.

La présente invention n'est nullement limitée aux réalisations décrites en tant qu'exemple et représentées dans les dessins, mais une telle procédure et un tel dispositif pour la dilution de compositions peuvent être réalisées sous plusieurs variantes sans quitter le cadre de l'invention.

## Revendications

1.- Procédure pour la dilution de compositions, plus particulièrement de produits homéopathiques, ou des quantités consécutives de liquide diluant (3) sont amenées dans un réservoir mélangeur (1) étant chaque fois vidangées, les quantités respectives à diluer étant chaque fois formées par le produit demeurant sur les parois du réservoir mélangeur (1) après chaque cycle de mélange, caractérisée en ce que le réservoir mélangeur (1) est évidé par jet d'air après chaque cycle de mélange.

2.- Dispositif pour la dilution de compositions suivant la procédure de la revendication 1, comprenant principalement un réservoir mélangeur (1), des moyens (2) d'admission d'un liquide diluant (3) au réservoir mélangeur (1), des moyens (4) pour agiter le réservoir mélangeur (1), des moyens (5) pour vider le réservoir mélangeur (1) et une unité de commande (6) permettant au moins la répétition du remplissage et de l'évidage un nombre de fois, caractérisé en ce que les moyens (5) pour évider le réservoir mélangeur (1) consistent en un dispositif d'évidage par jet d'air.

3.- Dispositif suivant la revendication 2, caractérisé en ce que le dispositif d'évidage par jet d'air consiste principalement en une source d'air comprimé (13) ; une canalisation d'admission d'air (14) qui s'étend jusqué dans le dessus du réservoir mélangeur (1) ; une soupape (18) placée dans la canalisation d'admission d'air (14) commandée par une unité de commande (6) et une canalisation d'évidage (19) dont l'ouverture d'admission s'étend jusqu'en-dessous du réservoir mélangeur (1).

4.- Dispositif suivant la revendication 3, caractérisé en ce que la source d'air comprimé (13) utilise une pompe.

5.- Dispositif suivant la revendication 4, caractérisé en ce que la pompe est une pompe à membrane (22).

6.- Dispositif suivant l'une des revendications 3 à 5, caractérisé en ce que ladite canalisation d'évidage (19) montre au bord de son ouverture d'admission au moins un évidement (34).

7.- Dispositif suivant l'une des revendication 3 à 6, caractérisé en ce que la canalisation d'évidage (19) consiste principalement en un petit tuyau de teflon (24) s'étendant dans le réservoir mélangeur (1) auquel un tuyau flexible d'évacuation (25, 27) peut être raccordé à l'extérieur du réservoir mélangeur (1).

8.- Dispositif suivant l'une des revendications précédentes, caractérisé en ce que les moyens (4) pour agiter le réservoir mélangeur (1) consistent principalement en un mécanisme dont les pièces sont principalement sujettes à des charges purement axiales.

9.- Dispositif suivant l'une des revendications précédentes, caractérisé en ce que les moyens (4) pour agiter le réservoir mélangeur (1) consistent en un vibromécanisme magnétique.

10.- Dispositif suivant la revendication 9, caractérisé en ce que lesdits moyens (4) consistent en un vibromoteur magnétique (35).

11.- Dispositif suivant la revendication 10, caractérisé en ce que le vibromoteur (35) est du type consistant principalement en un électro-aimant (36) dans lequel un induit (37) est fixé dans des manchons de guidage (39) pouvant se déplacer élastiquement dans le sens axial.

12.- Dispositif suivant l'une des revendications précédentes, caractérisé en ce que la canalisation d'admission d'air (14) possède un filtre (49).

13.- Dispositif suivant l'une des revendications précédentes, caractérisé en ce qu'un élément collecteur (23) pour le guide est installé dans la canalisation d'admission d'air (14).

14.- Dispositif suivant l'une des revendications précédentes, caractérisé en ce que les moyens (2) d'admission du liquide diluant (3) au réservoir mélangeur (1) sont prévus d'une canalisation d'admission (8) dans laquelle une pompe (9) est placée, cette pompe (9) étant prévue d'un organe de pompage étant raccordé magnétiquement à un moteur (10) placé à l'extérieur de la partie contenant le liquide.

15.- Dispositif suivant l'une des revendications précédentes, caractérisé en ce qu'il contient de moyens de dosage pour la quantité de liquide diluant (3) ajoutée, comprenant une soupape à chronorupteur (11) prévue dans la canalisation d'admission (8) du liquide.

16.- Dispositif suivant la revendication 15, caractérisé en ce que l'unité de commande (6) comprend des moyens de calibrage (50) automatiques permettant l'ouverture de la soupape à chronorupteur (11) durant une période déterminée et permettant le réenregistrement du poids du liquide libéré, ces moyens de calibrage calculant et réglant automatiquement par l'entremise d'une règle de trois et en fontion de la quantité désirée de liquide par cycle de mélange la période d'ouverture de la soupape (11) nécessaire à cet effet.

17.- Dispositif suivant l'une des revendications précédentes, caractérisé en ce qu'il possède un dispositif collecteur (28) pour collecter et stocker les dilutions formées, comprenant un support en forme de carrousel (44) pour plusieurs récipients (29) ; un passage (31) permettant le raccordement entre l'écoulement du réservoir mélangeur (1) et la canalisation d'écoulement (46) également installé sur le support en forme de carrousel (44) ; et une commande pour déplacer le support en forme de carrousel (44) de manière que, au choix, un des récipients (29) ou le passage (31) puisse être placé sous la sortie de la canalisation d'évidage (19) partant du réservoir mélangeur (1), l'unité de commande (6) permettant le positionnement programmable du support en forme de carrousel (44).

*Fig.1*

Fig.5

Fig.2

*Fig.3*

Fig.4